# EUROPÄISCHE PATENTSCHRIFT

(11) **EP 2 094 995 B1**
(45) Veröffentlichungstag und Bekanntmachung des Hinweises auf die Patenterteilung: **15.06.2011**
(21) Anmeldenummer: 07822173.6
(22) Anmeldetag: 05.11.2007
(51) Int. Cl.: F16H 61/00, F16H 61/28

(54) **STEUERUNGSVORRICHTUNG FÜR EIN GETRIEBE UND VERFAHREN ZUR STEUERUNG EINES GETRIEBES**
CONTROL DEVICE FOR A GEARBOX AND METHOD FOR CONTROLLING A GEARBOX
SYSTÈME DE COMMANDE POUR UN MÉCANISME DE TRANSMISSION ET PROCÉDÉ DE COMMANDE D'UN MÉCANISME DE TRANSMISSION

(30) Priorität: 16.11.2006 DE 102006054032
(43) Veröffentlichungstag der Anmeldung: 02.09.2009
(73) Patentinhaber: ZF Friedrichshafen AG, 88038 Friedrichshafen (DE)
(72) Erfinder: ULBRICHT, Markus, 88069 Tettnang (DE); STEINBORN, Mario, 88046 Friedrichshafen (DE)
(86) Internationale Anmeldenummer: PCT/EP2007/061844
(87) Internationale Veröffentlichungsnummer: WO 2008/058856

(56) Entgegenhaltungen:
- EP-A- 0 648 900
- EP-A- 1 270 954
- WO-A-98/13627
- DE-A1- 4 320 353
- DE-A1- 19 931 973

## Beschreibung

Die vorliegende Erfindung betrifft eine Steuerungsvorrichtung für ein Getriebe aufweisend eine Druckmittelquelle, eine stromabwärts mit der Druckmittelquelle verbundene Druckbegrenzungseinrichtung, mindestens eine stromabwärts mit der Druckbegrenzungseinrichtung verbundene erste steuerbare Ventileinrichtung und mindestens eine stromabwärts mit der ersten steuerbaren Ventileinrichtung verbundene Stelleinrichtung zum Verstellen des Getriebes, mindestens eine zweite steuerbare Ventileinrichtung, die über eine Versorgungsleitung direkt mit der Druckmittelquelle verbunden ist, und mindestens eine stromabwärts mit der zweiten steuerbaren Ventileinrichtung verbundene weitere Stelleinrichtung, eine elektrische Steuereinrichtung zum Ansteuern der ersten und zweiten steuerbaren Ventileinrichtung und eine mit der elektrischen Steuereinrichtung verbundene Sensoreinrichtung zur Messung des Druckmitteldrucks in der Versorgungsleitung. Die vorliegende Erfindung betrifft ferner ein Verfahren zur Steuerung eines Getriebes.

Aus der DE 199 31 973 A1 ist eine solche Vorrichtung zum Steuern eines Getriebes bekannt. Die bekannte Steuerungsvorrichtung umfasst eine Druckmittelquelle, die über eine Versorgungsleitung mit einem Druckbegrenzungsventil verbunden ist. An das Druckbegrenzungsventil schließt sich eine erste steuerbare Ventileinrichtung an, auf die wiederum eine Stelleinrichtung zum Verstellen des Getriebes folgt. Die erste steuerbare Ventileinrichtung umfasst zwei 3/2-Wegeventile, die einerseits mit dem Druckbegrenzungsventil und andererseits mit der Stelleinrichtung zum Verstellen des Getriebes verbunden sind. Das Druckbegrenzungsventil wie auch die erste steuerbare Ventileinrichtung werden in Abhängigkeit von dem Druck in den Leitungen zwischen dem Druckbegrenzungsventil einerseits und den 3/2-Wegeventilen andererseits angesteuert. Um diesen Druck zu ermitteln, schlägt die genannte Druckschrift vor, einen Drucksensor innerhalb der Druckmittelleitung anzuordnen, die sich von dem Druckbegrenzungsventil zu der ersten steuerbaren Ventileinrichtung erstreckt. Es ist ferner eine zweite steuerbare Ventileinrichtung vorgesehen, die der Steuerung einer weiteren Stelleinrichtung dient. Die zweite steuerbare Ventileinrichtung ist unmittelbar mit der Druckmittelquelle verbunden, wobei dies wiederum über die zuvor genannte Versorgungsleitung erfolgt. In der Versorgungsleitung ist ein weiterer Drucksensor vorgesehen, der der Überwachung des Versorgungsdruckes dient. Anhand des ermittelten Versorgungsdruckes wird die der Druckmittelquelle zugeordnete Pumpe angesteuert, so dass ein konstanter Versorgungsdruck innerhalb der Versorgungsleitungen sichergestellt ist.

Ausgehend von diesem Stand der Technik liegt der vorliegenden Erfindung die Aufgabe zugrunde, eine Steuerungsvorrichtung für ein Getriebe zu schaffen, die eine besonders einfache und sichere Steuerung oder Regelung der weiteren Stelleinrichtung ermöglicht, wobei der Aufbau der Steuerungsvorrichtung besonders einfach sein soll. Darüber hinaus liegt der vorliegenden Erfindung die Aufgabe zugrunde, ein besonders einfaches Verfahren zur Steuerung eines Getriebes anzugeben, bei dem insbesondere eine sichere Steuerung und Regelung der weiteren Stelleinrichtung gewährleistet ist.

Die Lösung dieser Aufgabe erfolgt anhand der in Patentanspruch 1 bzw. 8 angegebenen Merkmale. Vorteilhafte Ausführungsformen der Erfindung sind Gegenstand der Unteransprüche.

Die erfindungsgemäße Steuerungsvorrichtung für ein Getriebe weist zunächst eine Druckmittelquelle auf. Unter einer Druckmittelquelle kann beispielsweise eine Pumpe in Kombination mit einem Druckmittelspeicher verstanden werden. Als Druckmittel kommen beispielsweise Luft oder Öl in Frage, so dass es sich um eine pneumatische oder hydraulische Vorrichtung handeln kann. Stromabwärts der Druckmittelquelle ist eine mit der Druckmittelquelle verbundene Druckbegrenzungseinrichtung vorgesehen. Stromabwärts bedeutet hier wie auch nachstehend, dass das Druckmittel in diese Richtung bis zu einer Stelleinrichtung strömen muss, um dort ein Verstellen zu bewirken. Stromabwärts der Druckbegrenzungseinrichtung ist eine damit verbundene erste steuerbare Ventileinrichtung vorgesehen. Die erste steuerbare Ventileinrichtung kann beispielsweise mehrere Ventile umfassen. Es ist ferner mindestens eine stromabwärts mit der ersten steuerbaren Ventileinrichtung verbundene Stelleinrichtung zum Verstellen des Getriebes vorgesehen. Bei der Stelleinrichtung zum Verstellen des Getriebes kann es sich beispielsweise um einen doppeltwirkenden Zylinder handeln, dessen Druckkammern mit den Ventilen der ersten steuerbaren Ventileinrichtung verbunden sind. Die Steuerungsvorrichtung für ein Getriebe weist ferner mindestens eine zweite steuerbare Ventileinrichtung auf, die über eine Versorgungsleitung direkt mit der Druckmittelquelle verbunden ist. Das bedeutet, die zweite steuerbare Ventileinrichtung ist nicht stromabwärts der Druckbegrenzungseinrichtung vorgesehen, wie dies bei der ersten steuerbaren Ventileinrichtung der Fall ist. Stromabwärts der zweiten steuerbaren Ventileinrichtung ist eine weitere Stelleinrichtung vorgesehen, die mit der zweiten steuerbaren Ventileinrichtung verbunden ist. Bei der weiteren Stelleinrichtung kann es sich beispielsweise um eine Stelleinrichtung einer dem Getriebe zugeordneten Kupplung oder um eine Stelleinrichtung für eine Getriebebremse handeln. Es ist ferner eine elektrische Steuereinrichtung zum Ansteuern der ersten und zweiten steuerbaren Ventileinrichtung vorgesehen. Mit der elektrischen Steuereinrichtung ist ferner eine Sensoreinrichtung zur Messung des Druckmitteldrucks in der Versorgungsleitung verbunden. Erfindungsgemäß steht die elektrische Steuereinrichtung derart mit der zweiten steuerbaren Ventileinrichtung in Wirkverbindung, dass die zweite steuerbare Ventileinrichtung und somit die weitere Stelleinrichtung in Abhängigkeit von dem gemessenen Druckmitteldruck in der Versorgungsleitung angesteuert werden kann.

So wird gemäß der Erfindung nicht nur der Druckmitteldruck in der Versorgungsleitung ermittelt, vielmehr wird dieser ermittelte Druck auch der Steuerung der zweiten steuerbaren Ventileinrichtung und somit der weiteren Stelleinrichtung zugrunde gelegt. So ermöglicht die Erfindung eine bessere adaptive Regelbarkeit der zweiten steuerbaren Ventileinrichtung und somit der weiteren Stelleinrichtung. Dies ist insbesondere dann von Vorteil, wenn es sich bei der Stelleinrichtung um eine Kupplungsstelleinrichtung und/oder eine Getriebebremsenstelleinrichtung handelt.

In einer bevorzugten Ausführungsform der erfindungsgemäßen Steuerungsvorrichtung ist die weitere Stelleinrichtung, die mit der zweiten steuerbaren Ventileinrichtung verbunden ist, eine Kupplungsstelleinrichtung und/oder eine Getriebebremsenstelleinrichtung. Die weitere Stelleinrichtung ist somit eine Stelleinrichtung für eine dem Getriebe zugeordnete Kupplung und/oder eine Stelleinrichtung für eine dem Getriebe zugeordnete Getriebebremse. Im Falle einer Getriebebremsenstelleinrichtung ist somit erstmalig auch eine gute adaptive Regelbarkeit der Getriebebremse möglich.

Gemäß einer weiteren bevorzugten Ausführungsform der erfindungsgemäßen Steuerungsvorrichtung ist stromabwärts hinter der Druckbegrenzungseinrichtung eine mit der elektrischen Steuereinrichtung verbundene zweite Sensoreinrichtung zur Messung des Druckmitteldrucks vorgesehen. Die elektrische Steuereinrichtung steht dabei derart mit der ersten steuerbaren Ventileinrichtung in Wirkverbindung, dass die erste steuerbare Ventileinrichtung und somit die Stelleinrichtung zum Verstellen des Getriebes in Abhängigkeit von dem gemessenen Druckmitteldruck hinter der Druckbegrenzungseinrichtung angesteuert werden kann. Die zweite Sensoreinrichtung zur Messung des Druckmitteldrucks kann beispielsweise wiederum einen Drucksensor umfassen, der den Druck innerhalb einer Druckleitung zwischen der Druckbegrenzungseinrichtung einerseits und der Stelleinrichtung zum Verstellen des Getriebes andererseits misst.

Gemäß einer weiteren bevorzugten Ausführungsform der erfindungsgemäßen Steuerungsvorrichtung kann auch die Druckbegrenzungseinrichtung durch die elektrische Steuereinrichtung in Abhängigkeit von dem gemessenen Druckmitteldruck hinter der Druckbegrenzungseinrichtung angesteuert werden. So kann die Druckbegrenzungseinrichtung beispielsweise von einem Druckbegrenzungsventil gebildet sein, das durch ein pulsbreitenmoduliertes Signal von der elektrischen Steuereinrichtung betrieben wird, um unterschiedliche Drücke hinter der Druckbegrenzungseinrichtung zu erzeugen.

In einer weiteren bevorzugten Ausführungsform der erfindungsgemäßen Steuerungsvorrichtung ist die Druckbegrenzungseinrichtung daher ein Druckbegrenzungsventil.

In einer besonders bevorzugten Ausführungsform der erfindungsgemäßen Steuerungsvorrichtung ist die weitere Stelleinrichtung die Kupplungsstelleinrichtung. Es ist eine Druckmittelzufuhrleitung zwischen der zweiten steuerbaren Ventileinrichtung und der Kupplungsstelleinrichtung vorgesehen. Gemäß dieser Ausführungsform ist kein Rückschlagventil innerhalb der Druckmittelzufuhrleitung vorgesehen. Dank der Ansteuerung der zweiten steuerbaren Ventileinrichtung auf Grundlage des ermittelten Druckmitteldrucks in der Versorgungsleitung kann somit auf ein Rückschlagventil in der Druckmittelzufuhrleitung verzichtet werden. So kann die zweite steuerbare Ventileinrichtung beispielsweise geschlossen werden, wenn ein Druckabfall in der Versorgungsleitung gemessen wird, so dass ein Zurückströmen des Druckmittels in die Versorgungsleitung unterbunden ist, selbst wenn kein Rückschlagventil in der Druckmittelzufuhrleitung vorgesehen ist. Auf diese Weise ist ein besonders einfacher Aufbau der erfindungsgemäßen Steuerungsvorrichtung erzielt.

Aus den vorstehend genannten Gründen steht die elektrische Steuereinrichtung in einer vorteilhaften Ausführungsform der erfindungsgemäßen Steuerungsvorrichtung derart mit der zweiten steuerbaren Ventileinrichtung in Wirkverbindung, dass das Druckmittel nicht von der Druckmittelzufuhrleitung in die Versorgungsleitung zurückströmen kann, wenn der gemessene Druckmitteldruck in der Versorgungsleitung einen vorbestimmten Mindestwert unterschreitet. Wie bereits zuvor erläutert, kann somit allein durch die Ansteuerung der Ventile der zweiten steuerbaren Ventileinrichtung eine Aufrechterhaltung des Drucks innerhalb der Druckmittelzufuhrleitung sichergestellt werden, ohne dass hierfür ein aufwendiges Rückschlagventil erforderlich wäre.

Das erfindungsgemäße Verfahren zur Steuerung eines Getriebes umfasst die nachstehend genannten Verfahrensschritte: Bereitstellen einer Steuerungsvorrichtung für ein Getriebe mit einer Druckmittelquelle, einer stromabwärts mit der Druckmittelquelle verbundenen Druckbegrenzungseinrichtung, mindestens einer stromabwärts mit der Druckbegrenzungseinrichtung verbundenen ersten steuerbaren Ventileinrichtung und mindestens einer stromabwärts mit der ersten steuerbaren Ventileinrichtung verbundenen Stelleinrichtung zum Verstellen des Getriebes, mindestens einer zweiten steuerbaren Ventileinrichtung, die über eine Versorgungsleitung direkt mit der Druckmittelquelle verbunden ist, und mindestens einer stromabwärts mit der zweiten steuerbaren Ventileinrichtung verbundenen weiteren Stelleinrichtung, Messen des Druckmitteldrucks in der Versorgungsleitung und Ansteuern der zweiten steuerbaren Ventileinrichtung und somit der weiteren Stelleinrichtung in Abhängigkeit von dem gemessenen Druckmitteldruck und der Versorgungsleitung. Bezüglich der Vorteile des erfindungsgemäßen Verfahrens sei auf die unter Bezugnahme auf die erfindungsgemäße Steuerungsvorrichtung genannten Vorteile verwiesen.

In einer bevorzugten Ausführungsform des erfindungsgemäßen Verfahrens weist die bereitgestellte Steuerungsvorrichtung für ein Getriebe als weitere Stelleinrichtung eine Kupplungsstelleinrichtung und/oder eine Getriebebremsenstelleinrichtung auf.

In einer besonders bevorzugten Ausführungsform des erfindungsgemäßen Verfahrens sind ferner die Verfahrensschritte Messen des Druckmitteldrucks stromabwärts hinter der Druckbegrenzungseinrichtung und Ansteuern der ersten steuerbaren Ventileinrichtung und somit der Stelleinrichtung zum Verstellen des Getriebes in Abhängigkeit von dem gemessenen Druckmitteldruck stromabwärts hinter der Begrenzungseinrichtung.

Gemäß einer vorteilhaften Ausführungsform des erfindungsgemäßen Verfahrens ist ferner der Verfahrensschritt des Ansteuerns der Druckbegrenzungseinrichtung in Abhängigkeit von dem gemessenen Druckmitteldruck stromabwärts hinter der Druckbegrenzungseinrichtung vorgesehen.

In einer weiteren vorteilhaften Ausführungsform des erfindungsgemäßen Verfahrens wird ferner der Verfahrensschritt des Ansteuerns der zweiten steuerbaren Ventileinrichtung derart durchgeführt, dass das Druckmittel nicht von der weiteren Stelleinrichtung in die Versorgungsleitung zurückströmen kann, wenn der gemessene Druckmitteldruck in der Versorgungsleitung einen vorbestimmten Mindestwert unterschreitet. So kann beispielsweise bei einem Druckabfall in der Versorgungsleitung die zweite steuerbare Ventileinrichtung derart angesteuert werden, dass diese geschlossen ist und somit ein Zurückströmen verhindert.

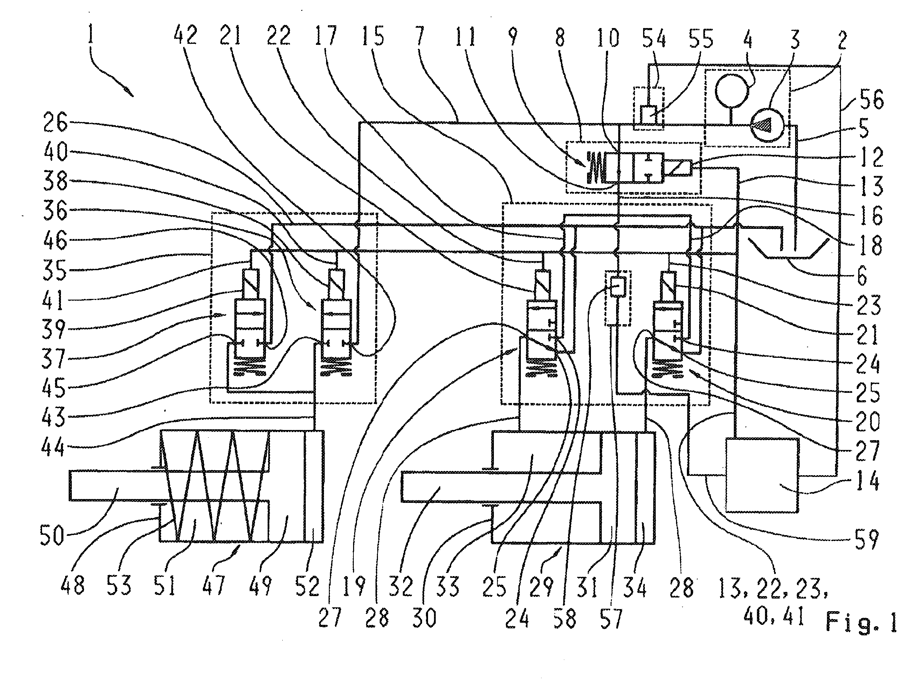

Die Erfindung wird im Folgenden anhand einer beispielhaften Ausführungsform unter Bezugnahme auf die zugehörige Zeichnung näher erläutert. Die einzige Figur zeigt eine schematische Darstellung einer Ausführungsform der erfindungsgemäßen Steuerungsvorrichtung für ein Getriebe.

Die einzige Figur zeigt eine schematische Darstellung einer Ausführungsform der erfindungsgemäßen Steuerungsvorrichtung 1 für ein Getriebe. Die Steuerungsvorrichtung 1 weist zunächst eine Druckmittelquelle 2 auf, die sowohl eine Druckmittelpumpe 3 als auch einen Druckmittelspeicher 4 umfasst. Als Druckmittel kommen beispielsweise Luft oder Öl in Frage. Die Druckmittelpumpe ist an ihrem ansaugseitigen Ende mit einer Druckmittelleitung 5 verbunden, deren Ende in eine Druckmittelsenke 6 ragt. An das andere Ende der Druckmittelpumpe 3 schließt sich eine Versorgungsleitung 7 an, an der auch der Druckmittelspeicher 4 vorgesehen ist.

Stromabwärts der Druckmittelquelle 2 ist eine Druckbegrenzungseinrichtung 8 vorgesehen, die mit der Versorgungsleitung 7 und somit mit der Druckmittelquelle 2 verbunden ist. Die Druckbegrenzungseinrichtung 8 umfasst im vorliegenden Beispiel ein Druckbegrenzungsventil 9, das als 2/2-Wegeventil ausgebildet ist. Das Druckbegrenzungsventil 9 hat dabei einen Druckmitteleingang 10, der mit der Versorgungsleitung 7 verbunden ist, und einen Druckmittelausgang 11. Die Steuerung des Druckbegrenzungsventils 9, das als Magnetventil ausgebildet ist, erfolgt hier über einen Elektromagneten 12, der über eine Steuerleitung 13 mit einer später näher erläuterten elektrischen Steuereinrichtung 14 verbunden ist. Stromabwärts der Druckbegrenzungseinrichtung 8 ist eine erste steuerbare Ventileinrichtung 15 mit der Druckbegrenzungseinrichtung 8 verbunden. Zu diesem Zweck schließt sich an den Druckmittelausgang 11 des Druckbegrenzungsventils 9 eine weitere Druckmittelleitung 16 an, die sich in zwei weitere Druckmittelleitungen 17 und 18 aufspaltet.

Die erste steuerbare Ventileinrichtung umfasst dabei ein erstes 3/2-Wegeventil 19 und ein zweites 3/2-Wegeventil 20, wobei die Druckmittelleitung 17 zu dem ersten als Magnetventil ausgebildeten 3/2-Wegeventil und die Druckmittelleitung 18 zu dem zweiten als Magnetventil ausgebildeten 3/2-Wegeventil führt. Die beiden 3/2-Wegeventile 19, 20 können wiederum über einen Elektromagneten 21, 22 betätigt werden, der über eine Steuerleitung 22, 23 mit der elektrischen Steuereinrichtung 14 verbunden ist. Jedes der beiden Ventile 19, 20 weist einen Druckmitteleingang 24 auf, der im Falle des Ventils 19 mit der Druckmittelleitung 17 und im Falle des Ventils 20 mit der Druckmittelleitung 18 verbunden ist. Ferner weist jedes Ventil 19, 20 einen Druckmittelauslass 25 auf, der über eine zusammengefasste Auslassleitung 26 mit der Druckmittelsenke 6 verbunden ist. Die Ventile 19, 20 weisen ferner einen Druckmittelausgang 27 auf, der über weitere Druckmittelleitungen 28 zu einer stromabwärtigen Stelleinrichtung 29 führt.

Die Stelleinrichtung 29 umfasst einen doppeltwirkenden Zylinder 30, in dem ein bewegbarer Kolben 31 angeordnet ist. An dem bewegbaren Kolben 31 ist eine Kolbenstange 32 angeordnet, die aus dem Zylinder 30 herausragt und somit als Stellglied zum Verstellen des Getriebes geeignet ist. Der Kolben 31 unterteilt den Innenraum innerhalb des Zylinders 30 in eine erste Druckmittelkammer 33 und eine zweite Druckmittelkammer 34. Dabei ist die erste Druckmittelkammer 33 über die Druckmittelleitung 28 mit dem Druckmittelausgang 27 des ersten Ventils 19 verbunden, während die zweite Druckmittelkammer 34 über die Druckmittelleitung 28 mit dem Druckmittelausgang 27 des zweiten Ventils 20 verbunden ist. Um die Druckmittelkammern 33, 34 mit Druckmittel zu füllen oder zu entleeren, müssen lediglich die beiden Ventile 19, 20 und das Druckbegrenzungsventil 9 von der elektrischen Steuerungseinrichtung 14 über die Steuerleitungen 13, 22, 23 entsprechend angesteuert werden.

Die Steuerungsvorrichtung 1 weist ferner eine zweite steuerbare Ventileinrichtung 35 auf. Die zweite steuerbare Ventileinrichtung 35 ist über die Versorgungsleitung 7 direkt mit der Druckmittelquelle 2 verbunden, das heißt, die zweite steuerbare Ventileinrichtung 35 ist nicht stromabwärts der Druckbegrenzungseinrichtung 8 vorgesehen, sondern wird mit Druckmittel aus der Versorgungsleitung 7 versorgt, das unter einem Druck steht, der dem Versorgungsdruck der Druckmittelquelle 2 entspricht und nicht durch eine Begrenzungseinrichtung verringert ist.

Die zweite steuerbare Ventileinrichtung 35 umfasst ein erstes Ventil 36 und ein zweites Ventil 37, wobei beide Ventile als 2/2-Wegeventile ausgebildet sind und über Elektromagneten 38, 39 betätigbar sind. Die besagten Elektromagnete 38, 39 werden wiederum über Steuerleitungen 40, 41 angesteuert, die zu der elektrischen Steuereinrichtung 14 führen. Der Druckmitteleingang 42 des ersten Ventils 36 ist unmittelbar mit der Versorgungsleitung 7 verbunden, wohingegen der Druckmittelausgang 43 des ersten Ventils 36 mit einer Druckmittelzufuhrleitung 44 verbunden ist. Der Druckmitteleingang 45 des zweiten Ventils 37 ist wiederum mit der Druckmittelzufuhrleitung 44 verbunden, während der Druckmittelausgang 46 des zweiten Ventils 37 mit der Auslassleitung 26 verbunden ist, die zu der Druckmittelsenke 6 führt. Stromabwärts der zweiten steuerbaren Ventileinrichtung 35 ist eine weitere Stelleinrichtung 47 vorgesehen, die über die Druckmittelzufuhrleitung 44 mit der zweiten steuerbaren Ventileinrichtung 35 verbunden ist.

Die weitere Stelleinrichtung 47 ist in der vorliegenden Ausführungsform als Stelleinrichtung für eine Kupplung (nicht dargestellt) oder eine Stelleinrichtung für eine Getriebebremse (nicht dargestellt) ausgebildet. Vorzugsweise sind noch weitere Stelleinrichtungen dieser Art vorgesehen, die dann jeweils über weitere zweite steuerbare Ventileinrichtungen angesteuert werden. Die Stelleinrichtung 47 weist einen Zylinder 48 auf, in dem ein Kolben 49 geführt ist. An dem Kolben 49 ist wiederum eine Kolbenstange 50 angeordnet, die aus dem Zylinder 48 herausragt und als Stellglied für die Kupplung oder Getriebebremse dient. Der Kolben 49 unterteilt den Innenraum des Zylinders 48 in eine Kammer 51 und eine Druckmittelkammer 52. Der Kolben ist dabei über eine Feder 53 in Richtung der Druckmittelkammer 52 vorgespannt. Die Druckmittelzufuhrleitung 44, die im vorliegenden Fall auch der Abfuhr des Druckmittels dient, mündet in die Druckmittelkammer 52.

Die Steuerungsvorrichtung 1 weist ferner eine erste Sensoreinrichtung 54 zur Messung des Druckmitteldrucks in der Versorgungsleitung 7 auf. Im vorliegenden Beispiel umfasst die Sensoreinrichtung 54 einen Drucksensor 55, der über eine Messleitung 56 mit der elektrischen Steuereinrichtung 14 verbunden ist. Es ist ferner eine zweite Sensoreinrichtung zur Messung des Druckmitteldrucks vorgesehen, die den Druckmitteldruck an dem Verzweigungspunkt zwischen der Druckmittelleitung 16 einerseits und den Druckmittelleitungen 17 und 18 andererseits misst. Die zweite Sensoreinrichtung 57 weist wiederum einen Drucksensor 58 auf, der über eine Messleitung 59 mit der elektrischen Steuereinrichtung 14 verbunden ist.

Die elektrische Steuereinrichtung 14 steht über die Steuerleitungen 40, 41 derart mit der zweiten steuerbaren Ventileinrichtung 35, das heißt mit dem ersten und zweiten Ventil 36, 37, in Wirkverbindung, dass die zweite steuerbare Ventileinrichtung 35 und somit die weitere Stelleinrichtung 47 in Abhängigkeit von dem gemessenen Druckmitteldruck in der Versorgungsleitung 7 angesteuert werden kann. Sollte der in der Versorgungsleitung 7 herrschende Druck beispielsweise unter einem vorbestimmten Mindestwert sinken, was z. B. durch eine Leckage verursacht sein könnte, so wird dies über den Drucksensor 55 der ersten Sensoreinrichtung 54 ermittelt und über die Messleitung 56 an die elektrische Steuereinrichtung 14 weitergegeben. Die elektrische Steuereinrichtung 14 kann daraufhin über die Steuerleitungen 40, 41 derart auf das erste und zweite Ventil 36, 37 der zweiten steuerbaren Ventileinrichtung 35 einwirken, dass die Ventile 36, 37 in die in der Figur gezeigte Schließstellung gebracht werden. In dieser Stellung kann das Druckmittel nicht aus der Druckmittelkammer 52 der weiteren Stelleinrichtung 47 über die Druckmittelzufuhrleitung in die Versorgungsleitung 7 bzw. die Auslassleitung 26 zurückströmen. Der Druck in der Druckmittelkammer 52 kann somit aufrechterhalten werden, ohne dass ein Rückschlagventil in der Druckzufuhrleitung erforderlich wäre, so dass auf ein solches Rückschlagventil in der gezeigten Ausführungsform verzichtet wurde.

Die elektrische Steuereinrichtung 14 steht ferner derart über die Steuerleitungen 22, 23 mit der ersten steuerbaren Ventileinrichtung 15 in Wirkverbindung, dass diese und somit auch die Stelleinrichtung 29 zum Verstellen des Getriebes in Abhängigkeit von dem durch die zweite Sensoreinrichtung 57 gemessenen Druckmitteldruck angesteuert werden können. Auch die Druckbegrenzungseinrichtung 8 bzw. deren Druckbegrenzungsventil 9 kann über die Steuerleitung 13 von der elektrischen Steuereinrichtung 14 in Abhängigkeit von dem durch den Drucksensor 58 ermittelten Druckmitteldruck angesteuert werden. So kann das Druckbegrenzungsventil 9 beispielsweise mit einem pulsbreitenmodulierten Signal von der elektrischen Steuereinrichtung beaufschlagt werden, so dass der Druckmitteldruck in der nachfolgenden Druckmittelleitung 16 gegenüber dem Versorgungsdruck in der Versorgungsleitung 7 reduziert ist.

### Bezugszeichen

- 1: Steuerungsvorrichtung
- 2: Druckmittelquelle
- 3: Druckmittelpumpe
- 4: Druckmittelspeicher
- 5: Druckmittelleitung
- 6: Druckmittelsenke
- 7: Versorgungsleitung
- 8: Druckbegrenzungseinrichtung
- 9: Druckbegrenzungsventil
- 10: Druckmitteleingang
- 11: Druckmittelausgang
- 12: Elektromagnet
- 13: Steuerleitung
- 14: Elektrische Steuereinrichtung
- 15: Erste steuerbare Ventileinrichtung
- 16: Druckmittelleitung
- 17: Druckmittelleitung
- 18: Druckmittelleitung
- 19: 3/2-Wegeventil
- 20: 3/2-Wegeventil
- 21: Elektromagnet
- 22: Steuerleitung
- 23: Steuerleitung
- 24: Druckmitteleingang
- 25: Druckmittelauslass
- 26: Auslassleitung
- 27: Druckmittelausgang
- 28: Druckmittelleitung
- 29: Stelleinrichtung zum Verstellen des Getriebes
- 30: Doppeltwirkender Zylinder
- 31: Kolben
- 32: Kolbenstange/Stellglied
- 33: Erste Druckmittelkammer
- 34: Zweite Druckmittelkammer
- 35: Zweite steuerbare Ventileinrichtung
- 36: Erstes Ventil
- 37: Zweites Ventil
- 38: Elektromagnet
- 39: Elektromagnet
- 40: Steuerleitung
- 41: Steuerleitung
- 42: Druckmitteleingang
- 43: Druckmittelausgang
- 44: Druckmittelzufuhrleitung
- 45: Druckmitteleingang
- 46: Druckmittelausgang
- 47: Weitere Stelleinrichtung
- 48: Zylinder
- 49: Kolben
- 50: Kolbenstange
- 51: Kammer
- 52: Druckmittelkammer
- 53: Feder
- 54: Erste Sensoreinrichtung
- 55: Drucksensor
- 56: Messleitung
- 57: Zweite Sensoreinrichtung
- 58: Drucksensor
- 59: Messleitung

## Patentansprüche

1. Steuerungsvorrichtung (1) für ein Getriebe, aufweisend
- eine Druckmittelquelle (2),
- eine stromabwärts mit der Druckmittelquelle (2) verbundene Druckbegrenzungseinrichtung (8),
- mindestens eine stromabwärts mit der Druckbegrenzungseinrichtung (8) verbundene erste steuerbare Ventileinrichtung (15) und mindestens eine stromabwärts mit der ersten steuerbaren Ventileinrichtung (15) verbundene Stelleinrichtung (29) zum Verstellen des Getriebes,
- mindestens eine zweite steuerbare Ventileinrichtung (35), die über eine Versorgungsleitung (7) direkt mit der Druckmittelquelle (2) verbunden ist, und mindestens eine stromabwärts mit der zweiten steuerbaren Ventileinrichtung (35) verbundene weitere Stelleinrichtung (47),
- eine elektrische Steuereinrichtung (14) zum Ansteuern der ersten und zweiten steuerbaren Ventileinrichtung (15, 35) und
- eine mit der elektrischen Steuereinrichtung (14) verbundene Sensoreinrichtung (54) zur Messung des Druckmitteldrucks in der Versorgungsleitung (7),
**dadurch gekennzeichnet, dass** die elektrische Steuereinrichtung (14) derart mit der zweiten steuerbaren Ventileinrichtung (35) in Wirkverbindung steht, dass die zweite steuerbare Ventileinrichtung (35) und somit die weitere Stelleinrichtung (47) in Abhängigkeit von dem gemessenen Druckmitteldruck in der Versorgungsleitung (7) ansteuerbar ist.

2. Steuerungsvorrichtung nach Anspruch 1, **dadurch gekennzeichnet, dass** die weitere Stelleinrichtung (47) eine Kupplungsstelleinrichtung und/oder eine Getriebebremsenstelleinrichtung ist.

3. Steuerungsvorrichtung nach einem der Ansprüche 1 oder 2, **dadurch gekennzeichnet, dass** stromabwärts hinter der Druckbegrenzungseinrichtung (8) eine mit der elektrischen Steuereinrichtung (14) verbundene zweite Sensoreinrichtung (57) zur Messung des Druckmitteldrucks vorgesehen ist, wobei die elektrische Steuereinrichtung (14) derart mit der ersten steuerbaren Ventileinrichtung (15) in Wirkverbindung steht, dass die erste steuerbare Ventileinrichtung (15) und somit die Stelleinrichtung (29) zum Verstellen des Getriebes in Abhängigkeit von dem gemessenen Druckmitteldruck hinter der Druckbegrenzungseinrichtung (8) ansteuerbar ist.

4. Steuerungsvorrichtung nach Anspruch 3, **dadurch gekennzeichnet, dass** auch die Druckbegrenzungseinrichtung (8) durch die elektrische Steuereinrichtung (14) in Abhängigkeit von dem gemessenen Druckmitteldruck hinter der Druckbegrenzungseinrichtung (8) ansteuerbar ist.

5. Steuerungsvorrichtung nach einem der vorangehenden Ansprüche, **dadurch gekennzeichnet, dass** die Druckbegrenzungseinrichtung (8) ein Druckbegrenzungsventil (9) ist.

6. Steuerungsvorrichtung nach einem der Ansprüche 2 bis 5, **dadurch gekennzeichnet, dass** die weitere Stelleinrichtung (47) die Kupplungsstelleinrichtung ist, wobei eine Druckmittelzufuhrleitung (44) zwischen der zweiten steuerbaren Ventileinrichtung und der Kupplungsstelleinrichtung vorgesehen ist, in der kein Rückschlagventil vorgesehen ist.

7. Steuerungsvorrichtung nach Anspruch 6, **dadurch gekennzeichnet, dass** die elektrische Steuereinrichtung (14) derart mit der zweiten steuerbaren Ventileinrichtung (35) in Wirkverbindung steht, dass das Druckmittel nicht von der Druckmittelzufuhrleitung (44) in die Versorgungsleitung (7) zurückströmen kann, wenn der gemessene Druckmitteldruck in der Versorgungsleitung (7) einen vorbestimmten Mindestwert unterschreitet.

8. Verfahren zur Steuerung eines Getriebes mit den Verfahrensschritten:
- Bereitstellen einer Steuerungsvorrichtung für ein Getriebe mit einer Druckmittelquelle, einer stromabwärts mit der Druckmittelquelle verbundenen Druckbegrenzungseinrichtung (8), mindestens einer stromabwärts mit der Druckbegrenzungseinrichtung verbundenen ersten steuerbaren Ventileinrichtung (15) und mindestens einer stromabwärts mit der ersten steuerbaren Ventileinrichtung verbundenen Stelleinrichtung (29) zum Verstellen des Getriebes, mindestens einer zweiten steuerbaren Ventileinrichtung (35), die über eine Versorgungsleitung direkt mit der Druckmittelquelle verbunden ist, und mindestens einer stromabwärts mit der zweiten steuerbaren Ventileinrichtung verbundenen weiteren Stelleinrichtung (47),
- Messen des Druckmitteldrucks in der Versorgungsleitung **gekennzeichnet durch**
- Ansteuern der zweiten steuerbaren Ventileinrichtung und somit der weiteren Stelleinrichtung (47) in Abhängigkeit von dem gemessenen Druckmitteldruck in der Versorgungsleitung (7).

9. Verfahren nach Anspruch 8, **dadurch gekennzeichnet, dass** die bereitgestellte Steuerungsvorrichtung für ein Getriebe als weitere Stelleinrichtung eine Kupplungsstelleinrichtung und/oder eine Getriebebremsenstelleinrichtung aufweist.

10. Verfahren nach einem der Ansprüche 8 oder 9, **gekennzeichnet durch** die weiteren Verfahrensschritte:
- Messen des Druckmitteldrucks stromabwärts hinter der Druckbegrenzungseinrichtung und
- Ansteuern der ersten steuerbaren Ventileinrichtung und somit der Stelleinrichtung zum Verstellen des Getriebes in Abhängigkeit von dem gemessenen Druckmitteldruck stromabwärts hinter der Druckbegrenzungseinrichtung.

11. Verfahren nach Anspruch 10 **gekennzeichnet durch** den weiteren Verfahrensschritt:
Ansteuern der Druckbegrenzungseinrichtung in Abhängigkeit von dem gemessenen Druckmitteldruck stromabwärts hinter der Druckbegrenzungseinrichtung.

12. Verfahren nach einem der Ansprüche 8 bis 11 **gekennzeichnet durch** den weiteren Verfahrensschritt:
Ansteuern der zweiten steuerbaren Ventileinrichtung derart, dass das Druckmittel nicht von der weiteren Stelleinrichtung in die Versorgungsleitung zurückströmen kann, wenn der gemessene Druckmitteldruck in der Versorgungsleitung einen vorbestimmten Mindestwert unterschreitet.

## Claims

1. Control device (1) for a transmission, having
- a pressure-medium source (2),
- a pressure-limiting arrangement (8) connected downstream to the pressure-medium source (2),
- at least one first controllable valve arrangement (15) connected downstream to the pressure-limiting arrangement (8) and at least one actuating arrangement (29), connected downstream to the first controllable valve arrangement (15), for adjusting the transmission,
- at least one second controllable valve arrangement (35) which is directly connected to the pressure-medium source (2) via a supply line (7), and at least one further actuating arrangement (47) connected downstream to the second controllable valve arrangement (35),
- an electrical control arrangement (14) for activating the first and the second controllable valve arrangement (15, 35), and
- a sensor arrangement (54), connected to the electrical control arrangement (14), for measuring the pressure-medium pressure in the supply line (7),
**characterized in that** the electrical control arrangement (14) is operatively connected to the second controllable valve arrangement (35) in such a way that the second controllable valve arrangement (35) and therefore the further actuating arrangement (47) can be activated as a function of the measured pressure-medium pressure in the supply line (7).

2. Control device according to Claim 1, **characterized in that** the further actuating arrangement (47) is a clutch-actuating arrangement and/or a transmission brake-actuating arrangement.

3. Control device according to either one of Claims 1 and 2, **characterized in that** a second sensor arrangement (57), connected to the electrical control arrangement (14), for measuring the pressure-medium pressure is provided downstream behind the pressure-limiting arrangement (8), the electrical control arrangement (14) being operatively connected to the first controllable valve arrangement (15) in such a way that the first controllable valve arrangement (15) and therefore the actuating arrangement (29) for adjusting the transmission can be activated as a function of the measured pressure-medium pressure behind the pressure-limiting arrangement (8).

4. Control device according to Claim 3, **characterized in that** the pressure-limiting arrangement (8), too, can be activated by the electrical control arrangement (14) as a function of the measured pressure-medium pressure behind the pressure-limiting arrangement (8).

5. Control device according to one of the preceding claims, **characterized in that** the pressure-limiting arrangement (8) is a pressure-limiting valve (9).

6. Control device according to one of Claims 2 to 5, **characterized in that** the further actuating arrangement (47) is the clutch-actuating arrangement, there being provided between the second controllable valve arrangement and the clutch-actuating arrangement a pressure-medium feed line (44) in which no non-return valve is provided.

7. Control device according to Claim 6, **characterized in that** the electrical control arrangement (14) is operatively connected to the second controllable valve arrangement (35) in such a way that the pressure medium cannot flow from the pressure-medium feed line (44) back into the supply line (7) when the measured pressure-medium pressure in the supply line (7) undershoots a predetermined minimum value.

8. Method for controlling a transmission, having the method steps:
- provision of a control device for a transmission, with a pressure-medium source, with a pressure-limiting arrangement (8) connected downstream to the pressure-medium source, with at least one first controllable valve arrangement (15) connected downstream to the pressure-limiting arrangement, and at least one actuating arrangement (29), connected downstream to the first controllable valve arrangement, for adjusting the transmission, with at least one second controllable valve arrangement (35) which is connected directly to the pressure-medium source via a supply line, and with at least one further actuating arrangement (47) connected downstream to the second controllable valve arrangement,
- measurement of the pressure-medium pressure in the supply line,
**characterized by**
- activation of the second controllable valve arrangement and therefore of the further actuating arrangement (47) as a function of the measured pressure-medium pressure in the supply line (7).

9. Method according to Claim 8, **characterized in that** the control device provided for a transmission as further actuating arrangement has a clutch-actuating arrangement and/or a transmission brake-actuating arrangement.

10. Method according to either one of Claims 8 and 9, **characterized by** the further method steps:
- measurement of the pressure-medium pressure downstream behind the pressure-limiting arrangement, and
- activation of the first controllable valve arrangement and therefore of the actuating arrangement for adjusting the transmission as a function of the measured pressure-medium pressure downstream behind the pressure-limiting arrangement.

11. Method according to Claim 10, **characterized by** the further method step:
activation of the pressure-limiting arrangement as a function of the measured pressure-medium pressure downstream behind the pressure-limiting arrangement.

12. Method according to one of Claims 8 to 11, **characterized by** the further method step:
activation of the second controllable valve arrangement in such a way that the pressure medium cannot flow from the further actuating arrangement into the supply line when the measured pressure-medium pressure in the supply line undershoots the predetermined minimum value.

## Revendications

1. Dispositif de commande (1) pour une transmission, présentant:
- une source de fluide sous pression (2),
- un dispositif de limitation de la pression (8) connecté en aval à la source de fluide sous pression (2),
- au moins un premier dispositif de soupape commandable (15) connecté en aval au dispositif de limitation de la pression (8) et au moins un dispositif de réglage (29) connecté en aval au premier dispositif de soupape commandable (15) pour le réglage de la transmission,
- au moins un deuxième dispositif de soupape commandable (35), qui est connecté directement à la source de fluide sous pression (2) par le biais d'une conduite d'alimentation (7), et au moins un dispositif de réglage supplémentaire (47) connecté en aval au deuxième dispositif de soupape commandable (35),
- un dispositif de commande électrique (14) pour commander le premier et le deuxième dispositif de soupape commandable (15, 35) et
- un dispositif de capteur (54) connecté au dispositif de commande électrique (14), pour mesurer la pression de fluide sous pression dans la conduite d'alimentation (7),
**caractérisé en ce que** le dispositif de commande électrique (14) est en liaison fonctionnelle avec le deuxième dispositif de soupape commandable (35) de telle sorte que le deuxième dispositif de soupape commandable (35) et donc le dispositif de réglage supplémentaire (47) puissent être commandés en fonction de la pression de fluide sous pression mesurée dans la conduite d'alimentation (7).

2. Dispositif de commande selon la revendication 1, **caractérisé en ce que** le dispositif de réglage supplémentaire (47) est un dispositif de réglage d'embrayage et/ou un dispositif de réglage de frein de transmission.

3. Dispositif de commande selon l'une quelconque des revendications 1 ou 2, **caractérisé en ce qu'**en aval derrière le dispositif de limitation de la pression (8) est prévu un deuxième dispositif de capteur (57) connecté au dispositif de commande électrique (14) pour mesurer la pression de fluide sous pression, le dispositif de commande électrique (14) étant en liaison fonctionnelle avec le premier dispositif de soupape commandable (15), de telle sorte que le premier dispositif de soupape commandable (15) et donc le dispositif de réglage (29) puissent être commandés pour régler la transmission en fonction de la pression de fluide sous pression mesurée derrière le dispositif de limitation de la pression (8).

4. Dispositif de commande selon la revendication 3, **caractérisé en ce que** le dispositif de limitation de la pression (8) peut aussi être commandé par le dispositif de commande électrique (14) en fonction de la pression de fluide sous pression mesurée derrière le dispositif de limitation de la pression (8).

5. Dispositif de commande selon l'une quelconque des revendications précédentes, **caractérisé en ce que** le dispositif de limitation de la pression (8) est une soupape de limitation de la pression (9).

6. Dispositif de commande selon l'une quelconque des revendications 2 à 5, **caractérisé en ce que** le dispositif de réglage supplémentaire (47) est le dispositif de réglage d'embrayage, une conduite d'alimentation en fluide sous pression (44) étant prévue entre le deuxième dispositif de soupape commandable et le dispositif de réglage d'embrayage, dans laquelle n'est prévue aucune soupape de non-retour.

7. Dispositif de commande selon la revendication 6, **caractérisé en ce que** le dispositif de commande électrique (14) est en liaison fonctionnelle avec le deuxième dispositif de soupape commandable (35) de telle sorte que le fluide sous pression ne puisse pas refluer depuis la conduite d'alimentation en fluide sous pression (44) dans la conduite d'alimentation (7) lorsque la pression de fluide sous pression mesurée dans la conduite d'alimentation (7) est en dessous d'une valeur minimale prédéterminée.

8. Procédé de commande d'une transmission, comprenant les étapes de procédé suivantes:
- fourniture d'un dispositif de commande pour une transmission avec une source de fluide sous pression, un dispositif de limitation de la pression (8) connecté en aval à la source de fluide sous pression, au moins un premier dispositif de soupape commandable (15) connecté en aval au dispositif de limitation de la pression et au moins un dispositif de réglage (29) connecté en aval au premier dispositif de soupape commandable, pour le réglage de la transmission, au moins un deuxième dispositif de soupape commandable (35), qui est connecté directement à la source de fluide sous pression par le biais d'une conduite d'alimentation, et au moins un dispositif de réglage supplémentaire (47) connecté en aval au deuxième dispositif de soupape commandable,
- mesure de la pression de fluide sous pression dans la conduite d'alimentation,
**caractérisé par**
- la commande du deuxième dispositif de soupape commandable et donc du dispositif de réglage supplémentaire (47) en fonction de la pression de fluide sous pression mesurée dans la conduite d'alimentation (7).

9. Procédé selon la revendication 8, **caractérisé en ce que** le dispositif de commande fourni pour une transmission présente, en tant que dispositif de réglage supplémentaire, un dispositif de réglage d'embrayage et/ou un dispositif de réglage de frein de transmission.

10. Procédé selon l'une quelconque des revendications 8 ou 9, **caractérisé par** les étapes de procédé supplémentaires suivantes:
- mesure de la pression de fluide sous pression en aval derrière le dispositif de limitation de la pression et
- commande du premier dispositif de soupape commandable et donc du dispositif de réglage pour régler la transmission en fonction de la pression de fluide sous pression mesurée en aval derrière le dispositif de limitation de la pression.

11. Procédé selon la revendication 10, **caractérisé par** l'étape de procédé suivante:
commande du dispositif de limitation de la pression en fonction de la pression de fluide sous pression mesurée en aval derrière le dispositif de limitation de la pression.

12. Procédé selon l'une quelconque des revendications 8 à 11, **caractérisé par** l'étape de procédé supplémentaire suivante:
commande du deuxième dispositif de soupape commandable de telle sorte que le fluide sous pression ne puisse pas refluer depuis le dispositif de réglage supplémentaire dans la conduite d'alimentation lorsque la pression de fluide sous pression mesurée dans la conduite d'alimentation est en dessous d'une valeur minimale prédéterminée.
